(19) Europäisches Patentamt
European Patent Office
Office européen des brevets

(11) **EP 1 334 781 B1**

(12) **EUROPEAN PATENT SPECIFICATION**

(45) Date of publication and mention
of the grant of the patent:
**24.06.2009 Bulletin 2009/26**

(51) Int Cl.:
***B09C 1/10*** (2006.01)

(21) Application number: **03001730.5**

(22) Date of filing: **27.01.2003**

(54) **Method of treating sediment spread over large areas**

Verfahren zur Behandlung von sich über grosse Flächen erstreckenden Sedimenten

Procédé pour le traitement de sédiments s'étendant sur de grandes surfaces

(84) Designated Contracting States:
**BE IT NL**

(30) Priority: **30.01.2002 IT VI20020015**

(43) Date of publication of application:
**13.08.2003 Bulletin 2003/33**

(73) Proprietor: **ECODECO S.R.L.**
**20159 Milan (IT)**

(72) Inventors:
 • **Donati, Gianni**
 **27010 Giussago (IT)**

 • **Natta, Giuseppe**
 **27010 Giussago (IT)**

(74) Representative: **Minoja, Fabrizio**
 **Bianchetti Bracco Minoja S.r.l.**
 **Via Plinio, 63**
 **20129 Milano (IT)**

(56) References cited:
 **WO-A-00/48755** **WO-A-96/00624**
 **NL-C- 1 009 022**

## Description

<u>Field of application</u>

This invention relates to a method of treating sediment using large areas, generally reclamation areas, situated below sea level or near large stretches of fresh water, in the presence of an aquifer that develops above a substantially impermeable stratum where farming is unprofitable because of the excessive salinity of the soil.

This method allows the use of areas which are generally unsuitable for farming because of the excessive salinity of the soil, and financial and environmental exploitation thereof by means of extensive cultivation of plants that produce biomass usable for energy purposes, for example.

The method according to the invention can be advantageously used to treat weakly polluted sediment or sludge containing organic matter, originating, for example, from harbour or canal dredging operations, and material deriving from the removal of contaminated soil, by the constructed wetland technique.

<u>State of the art</u>

Maintenance and cleaning operations which involve dredging canals or harbours produce large amounts of sludgy material with a high organic content, consisting of sediment that has built up over time and is usually weakly polluted by organic chemicals and/or metals.

A typical example is the sludge originating from the Venice Lagoon. The industrial activities of the petrochemical plant in Porto Marghera (Venice, Italy) are among the largest sources of release of organic pollutants such as polychlorinated biphenyls (PCBs), chlorinated organic compounds in general, polycyclic aromatic hydrocarbons (PAHs) and heavy metals.

At present, no specific location is available for disposing of these materials except for conventional tips, but this involves very high tipping costs and considerable environmental problems due to the large amounts in question.

Their disposal consequently represents a problem of considerable environmental impact, to which no financially viable solution has yet been found.

Land at the edge of very busy roads can pose similar problems.

Treatment methods based on the cultivated wetland technique can be used to treat weakly polluted materials. The material to be treated is spread on the ground and plant species able to absorb pollutants through their root apparatus are grown on it; the pollutants are thus transferred to and concentrated in the plant, which metabolises and breaks down part of the organic compounds in the course of its vegetative activity.

The drawback of these known methods is the possibility that pollutant compounds may migrate from the topsoil on which the sediment is deposited to the deeper soil layers, for example by simple leaching caused by irrigation or meteoric water, thus polluting the groundwater. To prevent this occurrence, sites destined for constructed wetland operations require the preparation of at least one natural or artificial impermeable layer, involving costs similar to those needed to prepare a tip.

Reclamation of land for agricultural use in an area which is adjacent to the sea and below sea level is usually performed by building barriers, banks and/or drainage channels which have a positive potential compared with the sea, and constructing a series of drainage channels in the same area which convey both the water that permeates from the marine aquifer and meteoric water into emptying basins. These basins are fitted with drainage pumps which keep the aquifer far enough below the minimum ground level to enable the land to be farmed.

Irrigation channels are also built in the reclamation area, to supply the fresh water needed for agricultural use. In some cases these channels have the dual function of irrigation and drainage.

These known conventional methods of reclaiming lagoon areas are mainly based on hydraulic calculations and rules deriving from experience. The criteria used to dimension the network of canals and hydraulic works are described in the classic text books, such as Colombo, *Manuale dell'Ingegnere*, 83rd edition, Vol. II, H-179 - H-206, Hoepli 1997, and in specific project reports.

For example, in the case of the Mezzano reclamation project, the most recent of the Ferrara (Italy) district reclamation projects which was carried out in 1960-1964, reference can be made to the reports of the "Circondario" Reclamation Consortium, Polesine di San Giorgio, Ferrara, in E. Spinelli, *Bonifica del Mezzano,* January 1991 and B. Guzzon, L. Panciatichi, *Monitoraggio di acque e terreni irrigui in Bonifica del Mezzano,* 1998.

In reclaimed areas, under positive balance conditions, a coastal aquifer normally conveys fresh water to the sea, and keeps the salty marine aquifer confined to a certain depth and a limited area.

However, if the relative piezometric heads are modified by natural processes or inappropriate work by man, a process of intrusion of salt water into the reclaimed areas may begin. Depression of land situated below sea level may also attract salt water from the sea and channels connected to the sea towards the inland aquifers.

This is now happening, for example, in the case of the Mezzano site situated in the Comacchio valleys in the Po Delta in the Province of Ferrara (Italy) where reclamation work took place in the early Sixties. There, the land lies 2-4 metres below sea level, and on sample plots, electrical conductivity has been measured at between 4 and 8 microsiemens/centimetre at a depth of 30-90 cm, corresponding to approx. 2.5 - 5 g/l of dissolved salts, even during the irrigation season (March-September), when leaching of salt water by the fresh water used for irrigation is at its height.

If this phenomenon is interpreted with a global mathematical model, it will be found that the salinity is due to a slow movement of the aquifer towards the areas in which the drainage pumps are located.

As the soil permeability measured is in the order of magnitude of $10^{-4}$ cm/s, consistently with the mainly sandy-loam nature of the soil, the results obtained with the mathematical model are compatible with the real measurements.

The saline aquifer fills the entire site from the surface down to an impermeable stratum situated at a depth of 5-25 m, and moves approximately in the direction of the main drains, perpendicular to the secondary drainage channels, conveying salt water to the site.

As the vast majority of crops cannot be grown under the salinity conditions thus created, in order to reduce the phytotoxicity of the soil and make farming by known techniques more efficient, more fresh water is conveyed to the land and the drainage system is improved and boosted to remove wastewater so as to induce a downward vertical motion of the water in the soil which reduces the salinity of the surface layers.

One drawback of this known method is the need for movement and suction of large masses of water, leading to higher energy costs.

Moreover, the increase in the mass of water is restricted by the permeability of the soil; an increase above the drainage capacity of the site, though necessary to reduce salinity, leads to substantial flooding.

In the present farming situation, agricultural exploitation of land which requires special or more expensive agronomic procedures or presents a low level of productivity is uneconomic, with the result that this land is left to lie fallow or abandoned.

The drawback of this procedure is environmental decay; however, it can be eliminated by suitable renaturalisation procedures.

Some plant species, such as reeds like the genus Phragmites, have characteristics of resistance to a brackish environment such that they become weeds, requiring extirpation to prevent them from spreading from the channel banks and invading the cultivatable area.

The technical literature reports that Phragmites and other species have a high level of ability to break down organic chemicals and absorb metals in soil when used according to the "constructed wetland" technique (J.L. Schnoor, GWRTAC, TE-98-01, October 1997).

In the area earmarked for renaturalisation, the plant species chosen is sown and cultivated so that its roots form a dense tangle or web that acts as a filtration element or biofilter against any pollutants in the soil.

Phragmites tolerate salt concentrations even higher than those in the sea (> 30 g/l), and can evaporate up to 800 mm of water a year, which means that they can to absorb much of the surface moisture and rainwater, while the root apparatus they develop during their growth breaks up the soil surface, even if it consists of compact, salty clods.

In particular, Phragmites can develop a root apparatus that forms a close-knit carpet 100 cm thick or more in the soil, and acts as an efficient biofilter against pollutants in the soil.

They have consequently been successfully used in experiments to treat polluted water, sludge or sediment in constructed wetlands as an alternative to conventional industrial filtration or treatment and disposal systems.

The use of Phragmites in constructed wetlands has so far been limited to small-scale pilot projects, such as the final treatment of wastewater originating from small municipal treatment plants; they have never been used on a larger scale due to lack of real financial and industrial advantages.

The following are the definitions of the terms used herein:

- "cultivation layer" or "reclamation layer" means the maximum height to which the aquifer reaches, which is basically free of brackish water and usable for agricultural purposes
- "reclamation" means the recovery of areas, especially lagoon areas and areas below sea level, for agricultural or industrial use
- "renaturalisation" means the conversion of areas formerly used for activities such as intensive agriculture to a controlled extensive or non-agricultural use so as to produce non-degraded environmental areas with a pleasant appearance suitable as a habitat for fauna, such as wildlife sanctuaries
- "hydraulic potential" means the hydraulic pressure of a basin or channel, net of its piezometric head
- "pollutants" means organic compounds such as PCBs or organochlorides and/or inorganic compounds which are classified as pollutants in the environmental protection legislation.

Disclosure of the invention

The primary purpose of this invention is to overcome the drawbacks mentioned above by providing a method for the deposit of sediment, soil, sludge and other materials with a high organic content, even if they are weakly polluted, which eliminates the risk of contamination of the aquifer with no need to instal a tarpaulin or waterproof layer of horizontal protection on or below the area.

A further purpose is to provide a method for extensive cultivation in marginal soil of plant species suitable to eliminate organic and inorganic pollutants from sediment, soil or sludge deposited on the soil.

A further purpose of the invention is to treat polluted sediment in accordance with the constructed wetland technique.

A further purpose is to provide a method of treating a reclamation area.

A further purpose is to provide a particularly cheap and effective method of recovery and renaturalisation of reclamation areas which cannot be cultivated efficiently or economically because of the high salinity of the soil and/or the irrigation water.

Last but not least, a further purpose is to use the biomass of the plant species cultivated to produce energy for combustion in a suitable unit.

These purposes, and others which will be described in greater detail below, are achieved by a method of treating sediment over large areas in the presence of an aquifer that develops above a substantially impermeable stratum, which said method comprises the following steps:

preparation in the area of a network of drainage channels and irrigation channels designed to remove part of the water from a surface layer or reclamation layer;

selection of a plant species which is resistant to salinity and able to vaporise considerable amounts of water and absorb the pollutants present in the soil;

sowing and cultivation in the area of said plant species so that its roots form a close-knit web in the soil, thus constituting a biofilter against pollutants present in the soil;

first cutting and harvesting of said plant species with conventional agricultural machinery;

deposit of a layer of sediment, which may be weakly polluted, on the area thus cultivated;

enhancement of the vegetative development of said plant species using extensive cultivation techniques in order to purify the sediment and renaturalise the area;

subsequent cutting and periodic harvesting of said plant species;

control of the hydraulic potential or hydraulic pressure net of piezometric head of said drainage and irrigation channels so as to produce a substantially upward flow of water in said reclamation layer towards the soil surface in which said plant species are present, thus preventing the descent of the pollutants and pollution of the aquifer.

Further embodiments of the invention are defined in the dependent claims.

This method provides an efficient, cheap solution to the problem of depositing large amounts of sediment or sludge, sometimes weakly polluted and with an organic content, without contaminating the aquifers.

This method also allows the use of reclamation areas, particularly those in which traditional crops cannot be grown at all, or are limited to a few species, because of the excessive salinity of the aquifer and/or the irrigation water caused by natural processes or human intervention.

Brief description of figures

Further characteristics and advantages of the invention will become clearer from the following detailed description of a preferred but non-exclusive embodiment of a method of treating sediment over large areas with environmental renaturalisation of the area, illustrated by way of example but not of limitation with the aid of the annexed drawings, wherein:

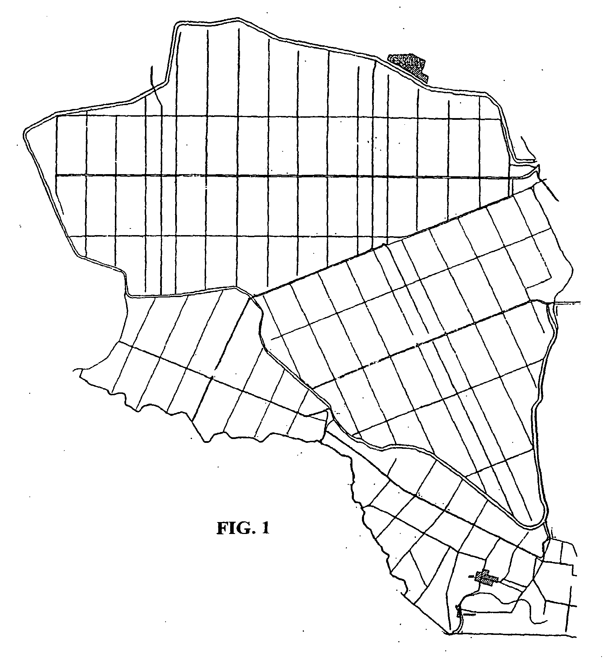

FIG. 1 shows a scale plan of an area to be renaturalised
FIG. 2 is a schematic view of a portion of the area shown in Fig. 1
FIG. 3 represents a schematic cross-section, through a vertical plane A-A, of the land shown in figure 2.

Detailed description of a preferred embodiment

In the above-mentioned figures, a large area to be renaturalised, located near to large basins of fresh or brackish water, indicated globally as no. 1, generally comprises one or more main irrigation channels 2 supplied by fresh water from a river, for example, and one or more main drains 3 for drainage of water, which are hydraulically connected to one or more drainage pumps marked P.

A plurality of secondary irrigation channels 4, 4', 4", ..., substantially parallel to one another, lead from each main irrigation channel 2, while a plurality of secondary drainage channels 5, 5', 5", ..., also substantially parallel to one another and to secondary irrigation channels 4, 4', 4", ..., lead from each main drainage channel 3 and form an interlocking pattern with secondary irrigation channels 4, 4', 4", ....

Irrigation channels 2, 4 and drainage channels 3, 5 bound plots of land 6, 6', ... on which the sediment treatment and renaturalisation method of the invention.

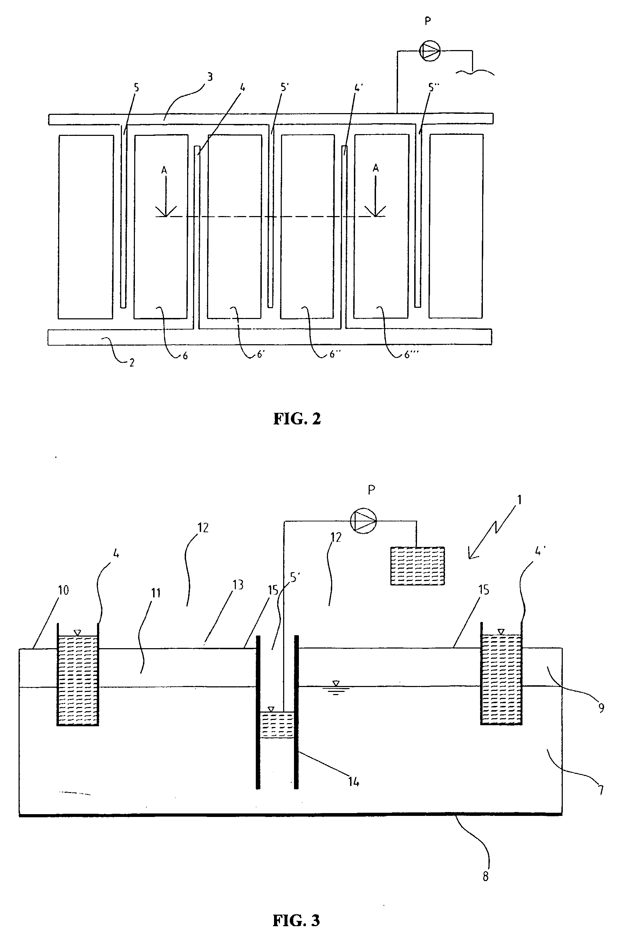

Fig. 3 schematically shows a cross-section of the area between two successive secondary irrigation channels 4, 4' through a vertical plane A-A, intersecting an intermediate drainage channel 5'.

As shown in that figure, an aquifer 7 of water originating from the sea, or from large stretches of fresh water, runs through the land in area 1; said aquifer is bounded underneath by a substantially impermeable natural stratum 8 represented schematically by a horizontal line, and by an upper level 9, also represented schematically by a horizontal line.

Upper level 9 of aquifer 7 is at a certain depth H from the free surface 10 of the soil.

By means of one or more drainage pumps P, both the brackish water and the fresh irrigation water received from irrigation channels 2, 4 will be conveyed through drainage channels 3, 3', 3", ... and 5, 5', 5", ... and discharged into the sea so as to lower level 9 of the aquifer and form a layer 11 of depth H, called the "reclamation" or "cultivation" layer, in the upper soil stratum.

According to the invention, a plant species resistant to salinity in the soil, such as Phragmites, which is able to evaporate a large amount of water and absorb any organic and/or inorganic pollutants in the soil through its root apparatus, is sown and cultivated in plots 6, 6', bounded by irrigation channels 4, 4' and drainage channels 5, 5'. This species, which is described in greater detail hereafter, is schematically indicated in the figures as no. 12.

The roots of said plant species form a close-knit web in the soil, thus constituting a biofilter against the pollutants in the soil.

After a first vegetation cycle which enables plant species 12 to become established in the area, it is cut and possibly harvested using conventional agricultural machinery.

A layer of sediment, soil or sludge, which may be weakly polluted, indicated in the figures as no. 13, is deposited for treatment on plots 6, 6' thus cultivated.

The vegetative development of selected plant species 12 is enhanced by the nutrients in the sediment. Subsequently, after growth, species 12 is cut and harvested by normal extensive cultivation techniques, with the result that the sediment is treated and the area renaturalised.

The flow rate and level of the free surface in irrigation channels 2, 4 and drainage channels 3, 5 are controlled so as to vary the hydraulic potential of the channels and cause a substantially upward flow of water in reclamation layer 11 towards soil surface 10 in which plant species 12 is present, so as to prevent the descent of pollutants to the aquifer.

Irrigation channels 2, 4 will preferably be situated at a much higher level than drainage channels 3, 5, thus causing a convective motion of the aquifer.

Preferably, the banks of drainage channels 3, 5, 5', 5" should comprise substantially vertical waterproof barriers 14 which extend downwards below the level of channels 3, 5, 5', 5" without reaching impermeable stratum 8. This reduces the risk of release of pollutants into the aquifer and the surrounding soil.

In a preferred embodiment, irrigation channels 4, 4', 4", ... and drainage channels 5, 5', 5"... could have a width of approx. 6 m, a depth of approx. 4 m, a distance of approx. 500 to 1000 m between them, and a length of approx. 1000 to 10,000 m. Each plot 6, 6', 6" situated between the channels will therefore have an area of between 50 and 1000 hectares and, for the purpose of application of the method to which this invention relates, may be further divided by adding other irrigation and drainage channels branching off from the preceding ones.

According to the invention, a clear space 15 with a width of approx. 50 to 100 m will be left along the edges of irrigation channels 2, 4, 4', 4" and drainage channels 3, 5, 5', 5", and weakly polluted sediment and/or soil 13 will not be deposited in that space.

Sediment 13 can be suitably supplied by dredging or cleaning of lagoon, canal, harbour or other coastal areas.

In operational terms, when the irrigation and drainage channels have been prepared as stated above, Phragmites rhizomes will be scattered in plots 6, 6', 6" destined for cultivation and the crops will be left to reach maturity for two years.

Plant species 12 will then be cut to a height of approx. 60 cm, and the cut material will be left to dry in the sun in the same way as hay and transported to a centre for the industrial exploitation of the resulting biomass by combustion thereof and production of electricity. Dried Phragmites is known to have a heating power of approx. 16,000 KJ/ton (4000 Kcal/kg).

Next, sediment 13 is transported across the channels adjacent to the area in question, for example on barges, and spread on the soil using conventional manure-spreading machines, to a depth of not more than 50 cm, and preferably around 30 cm, so as not to suffocate the plants.

Plant species 12 will recommence its cycle of growth and expansion of the root apparatus, aided by the nutrients present in sediment 13, and will be ready for cutting again in one growing season.

Area 1 can be used in this way for many years, allowing the deposit of sediment, soil or sludge with environmental benefits for lagoons and harbours, and can be restored to its original state, at the same time producing, when in full-scale operation, an average of some 40 tonnes of dry matter per hectare per annum which can be exploited to produce approx. 7 Kw of electricity per hectare.

The organic pollutants present in sediment 13 can be metabolised by plant species 12, and inorganic pollutants can be absorbed by it, in accordance with the known cultivated wetland technique.

The special organisation of channels 5, 5', ... with a clear space 15 and waterproof barriers 14 on the banks, and the upward flow into reclamation layer 11 induced by the pressure gradients compared with irrigation channels 4, 4', 4" ..., prevents the pollutants contained in sediment 13 from polluting aquifer 7.

With reference to Fig. 3, the distribution of pressures, velocities and concentrations of salts and pollutants in plots 6, which are used for phytodepuration (treatment) of sludge or sediment deposited between each secondary irrigation channel 4, 4', 4" and a secondary drainage channel 5, 5', 5" in accordance with the cultivated wetland technique, has been calculated by a mathematical model.

The equations that govern the motion of a fluid in a porous medium between the two channels can be considered as follows:

$$1)\ \nabla(\rho\,\nabla) = 0 \qquad \text{(modified equation of continuity)}$$

$$2)\ \mathbf{V} = -\mathbf{k}(\nabla\mathbf{p} - \rho\mathbf{g}) \qquad \text{(Darcy's law)}$$

wherein $\nabla$ is the divergence operator, $\rho$ is the density, $\mathbf{V}$ is the velocity vector, $\mathbf{k}$ is the soil permeability, $\mathbf{g}$ is the constant of gravity and $\mathbf{p}$ is the pressure of the liquid.

Equations 1) and 2) can be transformed into the equivalent Laplace equation:

$$3)\ \nabla^2(\rho\nabla) = 0 \text{ or } \nabla^2(P) = 0$$

where $\nabla^2$ is the Laplace operator and $\boldsymbol{P}$ is the potential defined by the relation $\nabla\boldsymbol{P} = \nabla\mathbf{p} - \rho\mathbf{g}.$

These equations can be resolved by calculation with finite differences of the first and second derivatives on the cross-section of Fig. 3, with the boundary conditions determined by the pressure of the aquifer, the hydrodynamic heads on the channels, and the impermeability of the vertical walls.

When the velocity profile in the soil has been calculated, the profiles of the salt concentration brought to the surface by the aquifer and the distribution of the pollutants from the surface to the aquifer can be calculated.

It has unexpectedly been found that if the potential of aquifer 7 is positive, namely if the aquifer pressure exceeds upper level 9 of the aquifer in metres of water column, the velocities of the water in the soil are always directed upwards throughout the site, and their value depends solely on the soil permeability (k).

In this case, salt water is conveyed from the level of aquifer 9 to soil surface 10 with salt concentrations practically equal to those of aquifer 7, with the exception of clear space 15 adjacent to the edges of the channels and with a depth equal to approximately half of the channel, where the concentration is lower due to mixing with the fresh water used for irrigation.

Under these conditions, traditional crops cannot be grown, whereas resistant plant species 12 such as Phragmites thrive. Among other things, the special hydrological situation will prevent the pollutants in sediment 13 deposited on the soil from migrating and contaminating aquifer 7.

If the concentration of pollutants on the surface is taken as a unit value, and assuming that the pollutants are soluble and not retained by the soil or the Phragmites roots, the concentration will be zero throughout the cross-section between the two adjacent channels 5, 5', with the exception of clear space 15 next to the channels, which is only a few dozen metres wide and a few metres deep.

However, if the level of aquifer 9 is at zero potential, there is a possibility of descending velocities due to intake of water from rainfall or surface irrigation, with leaching of pollutants but the presence of fresh water on the soil surface.

In this case, potentially polluted clear space 15 situated next to the channels is some 50 metres wide, and does not exceed the depth of the channels, which constitute a barrier to the movement of aquifer 7.

In real environments such as the Mezzano reclamation area in the Comacchio Valleys, the situation is halfway between the two cases cited above of a salty aquifer with zero potential and a salty aquifer with positive potential, presenting cyclical variations in salt concentrations due to the tides, increases in the level of the channels and backflow of salt water into them, with effects induced on the crops by precipitations and irrigation.

The channels constitute an efficient barrier to the movement of the aquifer close to the surface; to guarantee that the aquifer and the neighbouring areas will not be polluted under any circumstances due to the hydrology around the channels, the technique according to the invention also includes a clear space 15 in which weakly polluted sediment 13 is not deposited.

This invention also involves additional vertical impermeable barriers 14 on the banks of drainage channels 3, 5 with a depth of between 5 and 10 m, which are compatible with the depth of the aquifer and the deep impermeable stratum.

Clear space 15 can be usefully employed for farming operations; the depth of water barriers 14 at channels 5, 5' is greater than required according to the evaluations performed, but is the depth allowed by the automatic laying technology now available.

Some practical examples of embodiments of the renaturalisation method according to the invention are described below.

## EXAMPLE 1

This example relates to a plot with a width of 500 m, situated below sea level, where the pressure of the marine aquifer at a depth of 10 m is 0.5 m above hydrostatic pressure, which said plot is bounded by irrigation and drainage channels 4 m deep and 6 m wide in which the water is maintained at a level of 1 m.

In the hypothesis of constant permeability equal to the average permeability, found experimentally, of 0.0005 cm/s, the integration of equation 3 provides upward velocity profiles of 0.00025 cm/s on the entire site, with the exception of edge effects on the channel banks.

If the concentration of pollutants is taken as unitary on the surface, it is nil throughout the entire cross-section, with the exception of the channel banks up to a depth of 3 m.

It has also been calculated that the flow drained off by the two drainage channels, namely 0.17 cu.m/h/m per metre of length of the channel, well represents the mean flow drained off by those channels, while the surface flow over the entire surface is of the magnitude of 0.38 cu.m/h per metre of length of the site, with an aquifer flow rate of 0.6 cu.m/h/m.

If the level of one of the irrigation channels rises to 5 m, the situation will not change significantly in view of the small contribution made by transverse velocities; the higher channel will feed the aquifer vertically with 0.05 cu.m/h/m, while the lower channel will still receive 0.11 cu.m/h/m, the soil will transpire 0.38 cu.m/h/m of water over its entire width, and the aquifer will be slightly slowed to 0.5 cu.m/h/m.

As will be seen, the material balance is maintained.

Here again, the velocities are upward throughout the site, and the surface pollutants cannot be propagated to the aquifer as the molecular diffusion speeds are orders of magnitude lower than convective speeds.

The pollutant concentrations are heaviest in the area adjacent to the drainage channels, and considerably reduced in the areas adjacent to the irrigation channels at the higher level.

## EXAMPLE 2

This example relates to the pattern of channels shown in Example 1, with a water level of 1 m and an aquifer with zero potential.

In this case, it was found that the aquifer remains below the surface, with nil upward velocities.

Here again, the pollutant concentrations are nil throughout the cross-section, but the polluted area adjacent to the channels is accentuated and extends for some 50 m from the channel and to a depth of 4 m.

If the level of the irrigation channel is raised to 5 m, leaching of salt water will be observed to a depth of 2 m, with nil salt concentrations throughout the cross-section and up to a depth of 7 m in the area situated at a distance of 50-100 m from the higher irrigation channel.

Conversely, the pollutant concentrations move to the area situated within 50 m of the drainage channel, up to a depth of 4 m.

Any depressed area with a positive aquifer potential compared with coastal salt water basins or large stretches of fresh water could suitably be used according to the invention.

The use of reclamation areas according to the invention is an alternative to farming use, and involves setting up a cultivated wetland project to treat weakly polluted sludge or sediment by cultivating plants able to survive and thrive in soil with a high salinity level.

As a result of the invention, there is no need to instal waterproof tarpaulins like those used in tips. The tarpaulin would merely hinder the management of farming activities in the area and create serious obstacles to the permanent reclamation of the site in future for agricultural use or wildlife sanctuaries.

**Claims**

1. Method of treating sediment spread over large areas (1) in the presence of an aquifer (7) that develops above a substantially impermeable stratum (8), which method comprises the following steps:

    a) preparation in the area (1) of a network of drainage channels (3, 5, 5', 5", ...) and irrigation channels (2, 4, 4', 4", ...) designed to remove at least part of the water from a surface layer or reclamation layer (11);
    b) selection of a plant species (12) which is resistant to salinity and able to vaporise considerable amounts of water and absorb the pollutants present in the soil;
    c) sowing and cultivation in the area of a plant species (12) so that its roots form a close-knit web in the soil, thus constituting a biofilter against pollutants present in the soil;
    d) first cutting and harvesting of said plant species (12) with conventional agricultural machinery;
    e) deposit of a layer of sediment (13), which may be weakly polluted, on the cultivated area;
    f) enhancement of the vegetative development of plant species (12) using extensive cultivation techniques, in order to purify said sediment and renaturalise the area;
    g) subsequent cutting and periodic harvesting of said plant species (12);
    h) control of the hydraulic potential or hydraulic pressure net of piezometric head of said drainage channels (3, 5, 5', 5", ...) and irrigation channels (2, 4, 4', 4", ...) so as to produce a substantially upward flow of water in said reclamation layer (11) towards the soil surface (10) in which said plant species (12) are present, thus preventing the descent of the pollutants and pollution of the aquifer (11).

2. Method as claimed in claim 1, **characterised in that** said irrigation channels (2, 4, 4', 4", ...) and said drainage channels (3, 5, 5', 5", ...) have a hydraulic potential which is greater and lesser respectively than the hydraulic potential of the aquifer (7).

3. Method as claimed in claim 1, **characterised in that** the banks of said drainage channels (3, 5, 5', 5", ...) contain substantially vertical waterproof barriers (14) which extend to a pre-determined minimum depth (d).

4. Method as claimed in claim 1, **characterised in that** said pre-determined minimum depth (d) of the waterproof barriers is substantially less than the depth of said natural impermeable stratum (8).

5. Method as claimed in claim 1, **characterised in that** said irrigation channels (2, 4, 4', 4", ...) and drainage channels (3, 5, 5', 5", ...) are substantially parallel to one another, so as to form phytodepuration plots (6, 6', 6", ...) in the spaces between them.

6. Method as claimed in claim 1, **characterised in that** the length of said drainage channels (3, 5, 5', 5", ...) is between 1000 and 10,000 m, and the distance between said drainage channels (3, 5, 5', 5", ...) is between 500 and 5000 m, and preferably between 1000 and 3000 m.

7. Method as claimed in claim 5, **characterised in that** said sediment (13) is deposited on said phytodepuration plots (6, 6', 6", ...) with the exception of peripheral clear spaces (15) with a pre-determined width adjacent to the edges of said drainage channels (3, 5, 5', 5", ...) and irrigation channels (2, 4, 4', 4", ...).

8. Method as claimed in claim 7, **characterised in that** the width of said peripheral clear spaces (15) is between approximately 50 and 100 m.

9. Method as claimed in claim 1, **characterised in that** said weakly polluted sediment (13) is chosen from among lagoon sediment and sediment obtained by dredging canals, harbours and coastal areas.

10. Method as claimed in claim 1, **characterised in that** the growth of said plant species (12) is controlled so that the roots extend to a pre-determined depth in order to break up the surface clods of soil.

11. Method as claimed in claim 10, **characterised in that** said pre-determined depth is approximately 1 m.

12. Method as claimed in claim 1, **characterised in that** said plant species (12) resistant to high levels of salinity include Phragmites.

13. Method as claimed in claim 1, **characterised in that** it includes industrial exploitation of the biomasses obtained by cutting and harvesting said plant species (12) by combustion and/or energy production.

**Patentansprüche**

1. Verfahren zur Verarbeitung von Sediment, das über große Gebiete (1) verteilt ist, wenn eine Wasser führende Schicht (7) vorhanden ist, die sich oberhalb einer im Wesentlichen undurchlässigen Erdschicht (8) entwickelt, wobei das Verfahren folgende Schritte umfasst:

   a) Anlegen in dem Gebiet (1) eines Netzwerks aus Entwässerungsrinnen (3, 5, 5', 5", ...) und Bewässerungsrinnen (2, 4, 4', 4", ...), die dazu gedacht sind, mindestens einen Teil des Wassers aus der Oberflächenschicht oder Wiedergewinnungsschicht (11) zu entfernen;
   b) Auswählen einer Pflanzenart (12), die der Salzhaltigkeit widersteht und in der Lage ist, erhebliche Wassermengen verdunsten zu lassen und die im Erdreich vorhandenen Schadstoffe zu absorbieren;
   c) Säen und Bebauen einer Pflanzenart (12) in dem Gebiet, so dass ihre Wurzeln eine dicht gewebte Matte im Erdreich bilden, wodurch ein Biofilter gegen im Erdreich vorhandene Schadstoffe gebildet wird;
   d) erstes Mähen und Ernten der Pflanzenart (12) mit herkömmlichen Landbaumaschinen;
   e) Ablagern einer schwach verseuchten Sedimentschicht (13) auf dem bebauten Gebiet;
   f) Verbessern der vegetativen Entwicklung der Pflanzenart (12) unter Verwendung extensiver Bebauungstechniken, um das Sediment zu reinigen und das Gebiet zurück zu bauen;
   g) anschließendes Mähen und periodisches Ernten der Pflanzenart (12);
   h) Steuern des hydraulischen Potentials oder des hydraulischen Drucks abzüglich des piezometrischen Gefälles der Entwässerungsrinnen (3, 5, 5', 5", ...) und Bewässerungsrinnen (2, 4, 4', 4", ...), um im Wesentlichen einen nach oben gerichteten Wasserfluss in der Wiedergewinnungsschicht (11) in Richtung auf die Erdreichoberfläche (10) zu erzeugen, in der die Pflanzenart (12) vorhanden ist, wodurch das Absinken der Schadstoffe und eine Verseuchung der Wasser führenden Schicht (11) verhindert wird.

2. Verfahren nach Anspruch 1, **dadurch gekennzeichnet, dass** die Bewässerungsrinnen (2, 4, 4', 4", ...) und die Entwässerungsrinnen (3, 5, 5', 5", ...) ein hydraulisches Potential haben, das jeweils größer und kleiner ist als das hydraulische Potential der Wasserführenden Schicht (7).

3. Verfahren nach Anspruch 1, **dadurch gekennzeichnet, dass** die Dämme der Entwässerungsrinnen (3, 5, 5', 5", ...) im Wesentlichen senkrechte wasserdichte Sperren (14) umfassen, die sich bis zu einer vorherbestimmten Mindesttiefe (d) erstrecken.

4. Verfahren nach Anspruch 1, **dadurch gekennzeichnet, dass** die vorherbestimmte Mindesttiefe (d) der wasserdichten Sperren im Wesentlichen geringer ist als die Tiefe der natürlichen undurchlässigen Erdschicht (8).

5. Verfahren nach Anspruch 1, **dadurch gekennzeichnet, dass** die Bewässerungsrinnen (2, 4, 4', 4", ...) und die Entwässerungsrinnen (3, 5, 5', 5", ...) im Wesentlichen zueinander parallel sind, um pflanzliche Bereinigungsparzellen (6, 6', 6", ...) in den Räumen dazwischen zu bilden.

6. Verfahren nach Anspruch 1, **dadurch gekennzeichnet, dass** die Länge der Entwässerungsrinnen (3, 5, 5', 5", ...) zwischen 1000 und 10 000 m liegt, und der Abstand zwischen den Entwässerungsrinnen (3, 5, 5', 5", ...) zwischen 500 und 5000 m und bevorzugt zwischen 1000 und 3000 m liegt.

7. Verfahren nach Anspruch 5, **dadurch gekennzeichnet, dass** das Sediment (13) auf den pflanzlichen Bereinigungsparzellen (6, 6', 6", ...) abgelagert wird, mit Ausnahme von freien Peripherieräumen (15) einer vorherbestimmten Breite angrenzend an die Ränder der Entwässerungsrinnen (3, 5, 5', 5", ...) und Bewässerungsrinnen (2, 4, 4', 4", ...).

8. Verfahren nach Anspruch 7, **dadurch gekennzeichnet, dass** die Breite der freien Peripherieräume (15) zwischen ungefähr 50 und 100 m liegt.

9. Verfahren nach Anspruch 1, **dadurch gekennzeichnet, dass** das schwach verseuchte Sediment (13) aus Lagunensediment und einem Sediment, das durch Ausbaggern von Kanälen, Häfen und Küstengebieten erhalten wird, ausgewählt wird.

10. Verfahren nach Anspruch 1, **dadurch gekennzeichnet, dass** das Wachstum der Pflanzenart (12) derart gesteuert wird, dass die Wurzeln sich bis auf eine vorherbestimmte Tiefe erstrecken, um die oberflächlichen Erdklumpen aufzulockern.

11. Verfahren nach Anspruch 10, **dadurch gekennzeichnet, dass** die vorherbestimmte Tiefe ungefähr 1 m beträgt.

12. Verfahren nach Anspruch 1, **dadurch gekennzeichnet, dass** die Pflanzenarten (12), die hohen Salzhaltigkeitsstufen widerstehen, Phragmiten umfassen.

13. Verfahren nach Anspruch 1, **dadurch gekennzeichnet, dass** es die industrielle Ausnutzung der Biomassen, die durch Mähen und Ernten der Pflanzenart (12) erhalten werden, durch Verbrennung und/oder Energieproduktion umfasst.

## Revendications

1. Procédé de traitement de sédiments étendus sur de grandes zones (1) en présence d'un aquifère (7) se développant au-dessus d'une couche sensiblement imperméable (8), ledit procédé comprenant les étapes suivantes :

   a) préparation dans la zone (1) d'un réseau de canaux de drainage (3, 5, 5', 5'', ...) et de canaux d'irrigation (2, 4, 4', 4'', ...) conçus pour retirer au moins une partie de l'eau d'une couche superficielle ou d'une couche de bonification (11) ;
   b) sélection d'une espèce de plante (12) résistante à la salinité et capable de vaporiser des quantités considérables d'eau et d'absorber les polluants présents dans le sol ;
   c) ensemencement et culture dans la zone d'une espèce de plante (12) de telle sorte que ses racines forment un réseau très fourni dans le sol, constituant ainsi un biofiltre contre les polluants présents dans le sol ;
   d) une première coupe et récolte de ladite espèce de plante (12) avec des machines agricoles traditionnelles ;
   e) le dépôt d'une couche de sédiments (13), qui peuvent être faiblement pollués, sur la zone cultivée ;
   f) l'amélioration du développement végétatif des espèces de plante (12) en utilisant des techniques de culture extensive, afin de purifier lesdits sédiments et de renaturaliser la zone ;
   g) la coupe successive et la récolte périodique de ladite espèce de plante (12) ;
   h) le contrôle du potentiel hydraulique ou de la pression hydraulique de la tête piézométrique desdits canaux de drainage (3, 5, 5', 5'', ...) et canaux d'irrigation (2, 4, 4', 4'', ...) de façon à produire un flux d'eau sensiblement vers le haut dans ladite couche de bonification (11) en direction de la surface du sol (10) dans lequel lesdites espèces de plante (12) sont présentes, empêchant ainsi la descente des polluants et la pollution de l'aquifère (11).

2. Procédé selon la revendication 1, **caractérisé en ce que** lesdits canaux d'irrigation (2, 4, 4', 4'', ...) et lesdits canaux de drainage (3, 5, 5', 5'', ...) ont un potentiel hydraulique supérieur et inférieur, respectivement, au potentiel hydraulique de l'aquifère (7).

3. Procédé selon la revendication 1, **caractérisé en ce que** les berges desdits canaux de drainage (3, 5, 5', 5'', ...) contiennent des barrières étanches sensiblement verticales (14) s'étendant jusqu'à une profondeur (d) minimale prédéterminée.

4. Procédé selon la revendication 1, **caractérisé en ce que** ladite profondeur (d) minimale prédéterminée des barrières étanches est sensiblement inférieure à la profondeur de ladite couche imperméable naturelle (8).

5. Procédé selon la revendication 1, **caractérisé en ce que** lesdits canaux d'irrigation (2, 4, 4', 4'', ...) et lesdits canaux de drainage (3, 5, 5', 5'', ...) sont sensiblement parallèles les uns aux autres, de façon à former des stations de phytodépuration (6, 6', 6'', ...) dans les espaces entre eux.

6. Procédé selon la revendication 1, **caractérisé en ce que** la longueur desdits canaux de drainage (3, 5, 5', 5'', ...) est entre 1000 et 10 000 m, et la distance entre lesdits canaux de drainage (3, 5, 5', 5'', ...) est entre 500 et 5000 m, et de préférence entre 1000 et 3000 m.

7. Procédé selon la revendication 5, **caractérisé en ce que** lesdits sédiments (13) sont déposés sur lesdites stations de phytodépuration (6, 6', 6'', ...) à l'exception des espaces périphériques clairs (15) avec une largeur prédéterminée adjacente aux bords desdits canaux de drainage (3, 5, 5', 5'', ...) et desdits canaux d'irrigation (2, 4, 4', 4'', ...).

8. Procédé selon la revendication 7, **caractérisé en ce que** la largeur desdits espaces périphériques clairs (15) est entre environ 50 et 100 m.

9. Procédé selon la revendication 1, **caractérisé en ce que** lesdits sédiments faiblement pollués (13) sont choisis parmi les sédiments du lagon et les sédiments obtenus en draguant les canaux, les ports et les zones côtières.

10. Procédé selon la revendication 1, **caractérisé en ce que** la croissance desdites espèces de plante (12) est contrôlée de telle sorte que les racines s'étendent sur une profondeur prédéterminée afin de casser les mottes superficielles du sol.

11. Procédé selon la revendication 10, **caractérisé en ce que** ladite profondeur prédéterminée est d'environ 1 m.

12. Procédé selon la revendication 1, **caractérisé en ce que** lesdites espèces de plante (12) résistantes à des niveaux élevés de salinité comprennent les Phragmites.

13. Procédé selon la revendication 1, **caractérisé en ce qu'**il comprend l'exploitation industrielle des biomasses obtenues en coupant et en récoltant lesdites espèces de plante (12) par combustion et/ou production d'énergie.

**FIG. 1**

**FIG. 2**

**FIG. 3**